# EUROPEAN PATENT APPLICATION

(11) **EP 0 746 969 A1**
(43) Date of publication of application: **11.12.1996**
(21) Application number: 96201542.6
(22) Date of filing: 03.06.1996
(51) Int. Cl.: A01B 29/04

(54) **A soil cultivating machine**

(30) Priority: 07.06.1995 NL 1000507
(71) Applicant: MAASLAND N.V., 3155 PD Maasland (NL)
(72) Inventor: Bom, Cornelis Johannes Gerardus, 3181 VC Rozenburg (NL)
(74) Representative: Mulder, Herman

(57) **Abstract**

The invention relates to a soil cultivating machine including an open cage roller provided, at its circumference, with longitudinal elements, such as bars, while at least one of said longitudinal elements is at least partly movable in radial direction. A support (7) comprises a slot-shaped recess (11) that can be closed near both ends. In a specific embodiment, the recess extends substantially radially.

## Description

The present invention relates to a soil cultivating machine including an open cage roller provided, at its circumference, with longitudinal elements, such as bars.

Such a roller is known from the UK patent application GB 2 059 231. Generally the functions of a roller are or may be recompaction of the loosened soil, further crumbling of the worked soil, mixing seed with the superficial layer of soil, and partial sustainment of a leading machine or machine part. Soil cultivating machines provided with the known, so-called cage roller have the advantage that the weight of the machine can be maintained relatively low and that scraper elements, as applied at the cylindrical circumference of a closed so-called packer roller, are not required. Due to the open character of the known roller, the worked soil is, with many types of soil, left somewhat corrugated, which may be favourable in cases where erosive effects can be expected. For its somewhat greater crumbling action, the cage roller may under circumstances also be preferred to a packer roller. However, the disadvantage of a soil cultivating machine including the known roller is that under somewhat humid conditions, due to an excessive caking on of soil, the use thereof is less satisfactory or is not satisfactory at all. The present invention has for its object to obviate this drawback in a favourable manner or, at least in certain circumstances, to improve therein, thereby largely maintaining the working characteristics of the known roller.

According to the invention, such is achieved by means of a construction as described in the characterizing portion of the following main claim. A soil roller characterized by such features has the advantage that soil caked on to the machine is shaken off by the allowed movement of a longitudinal element. Such movement may e.g. be caused by the pressure exercised by the weight of the roller and machine and the counterpressure of the soil to be worked, or by vibrations occurring during rolling. A particular advantage of the invention is that use is being made of the resilience of many commonly applied metal or synthetic construction materials.

In a particular embodiment according to the invention, the longitudinal elements are disposed spirally though substantially within the longitudinal direction of the roller, in a manner known per se from said UK-application.

For a better understanding of the present invention and to show how the same may be carried into effect, reference will now be made, by way of example, to the accompanying drawings, in which:
Figure 1 shows, in plan view, a soil cultivating machine according to the invention;
Figure 2 is a side view taken on the line II-II in Figure 1;
Figure 3 is a cross-sectional view taken on the line III-III in Figure 2;
Figure 4 is a cross-sectional view according to the line IV-IV in Figure 2;
Figure 5 shows, in a view in accordance with Figure 3, a detail according to a first alternative embodiment of the machine,
and Figures 6 to 8 show, in a view in accordance with Figure 2, a detail of three further alternative constructions.

In the drawings, corresponding parts have been indicated by the same reference numerals. Furthermore, the invention is by no means restricted to the embodiments shown and described here; they only serve to illustrate the inventive idea.

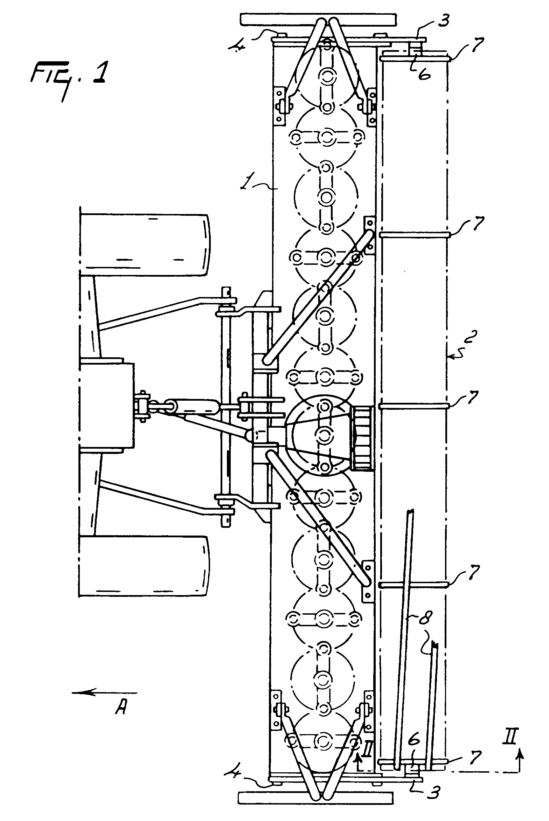

Figure 1 shows, in plan view, a soil cultivating machine 1, in the present embodiment designed as a rotary harrow 1, provided with a so-called open roller 2, in the present embodiment constituted by a cage roller. In the application with a rotary harrow, such a roller usually has a diameter of 30 to 60 cm. Via arms 3, extending in the direction of travel A, the roller 2 is pivotably connected to the soil cultivating machine 1. For that purpose, the front side of an arm 3 is arranged about a pivot shaft 4, that is connected with the frame of the soil cultivating machine 1. In the present embodiment, the pivot shaft 4 is disposed near the front side of the frame of the rotary harrow. At some distance therebehind, the soil cultivating machine 1 is supported, via a pin being adjustable in height and being arranged transversely to the direction of travel A, to the upper sides of the arms 3. Said construction enables an adjustment in height of the soil cultivating machine 1 relative to the roller 2, and allows the frame of the soil cultivating machine 1, e.g. upon meeting with a stone in the field or a hard soil surface, to deflect upwardly relative to the roller.

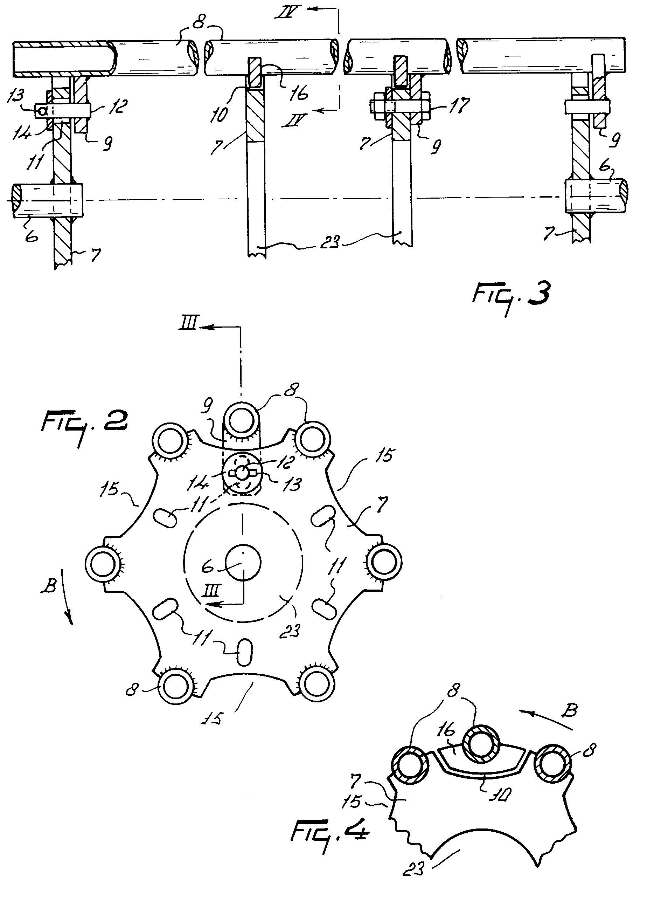

To the rear side of an arm 3, there is attached a (non-shown) bearing, in which an axis of rotation 6 of the roller 2, shown in Figures 2 and 3, is accomodated. In the present embodiment, the axis of rotation 6 is constituted by two journals 6, that are both attached to the two outermost ones of five disc-shaped supports 7, arranged vertically and in the direction of travel A, for longitudinal elements 8 constituting the circumference of the substantially cylindrical roller 2.

The longitudinal elements 8, made of metal or synthetic construction material, may be constituted by tubes, bars and straps having either a rectangular or a triangular profile. At least three but, according to the present embodiment, preferably six longitudinal elements 8 are connected rigidly, in the present embodiment via a welded connection, to generally disc-like supports 7, for the purpose of strengthening the cage roller. In the present embodiment, the longitudinal elements 8 are disposed spirally, but substantially in the longitudinal direction of the roller 2, along the circumference thereof. The spiral shape results in a more favourable running out of the roller 2 and, consequently, in a less jerky running thereof. The central portion of the two outermost supports 7 is closed for the greater part, in view of a journal 6 to be included therein. In order to reduce the weight of the construction, the central portion of the supports 7, situated therebetween, comprises a circular opening 23.

Figures 2 and 3 show that, between each of the rigidly connected longitudinal elements 8, there is provided a longitudinal element 8, which, near its two ends, is movable relative to the relevant outermost support 7. In the present embodiment, the longitudinal elements 8, being movable near their ends, are also detachably accomodated in the roller 2. For that purpose, a support 7 comprises, between the rigidly connected longitudinal elements 8, supporting profiles 15 constituted by recesses having a bearing edge being relatively wide relative to the circumference of said support 7, for a supporting plate 16 fitting in the supporting profile 15, which supporting plate 16 is rigidly connected to a longitudinal element 8. In the present embodiment, a recess 15 has a slightly curved bottom edge merging angularly into more or less standing side walls extending at a small angle relative to a radian from the centre of the roller. The invention utilizes the resilience of the aforementioned materials of the longitudinal elements 8, whilst charging said materials in such a way that permanent deformation or breakage thereof is avoided. For machines destined to be used very regularly, as is the case with agricultural contractors, there is used, according to the invention, a specific resilient material, such as spring steel. By designing one or more longitudinal elements 8 as detachable ones, there will be obtained a roller 2 having, optionally, a more or less crumbling effect. For that purpose, a longitudinal element 8 is, at least in the region of one or more supports 7 located centrally in the roller 2, provided with one or, according to the present embodiment, two connecting elements extending at least in radial direction along a support 7. Said connecting elements are designed as plate-shaped lugs 9 connected with the relevant support 7, in the present embodiment via a bolt-nut connection provided with washers 14. In a suchlike manner, i.e. via a lug 9, a connecting pin 12 and a locking pin 13, the longitudinal element 8 may be connected to an outermost support 7, the connecting pin 12 being guided through a slot hole 11 whose length may amount to approximately twice the diameter of the relevant tubular longitudinal element 8. The connecting pin 12 is rigidly connected to the lug 9, while there is provided a washer 14 between the locking pin 13 and the support 7.

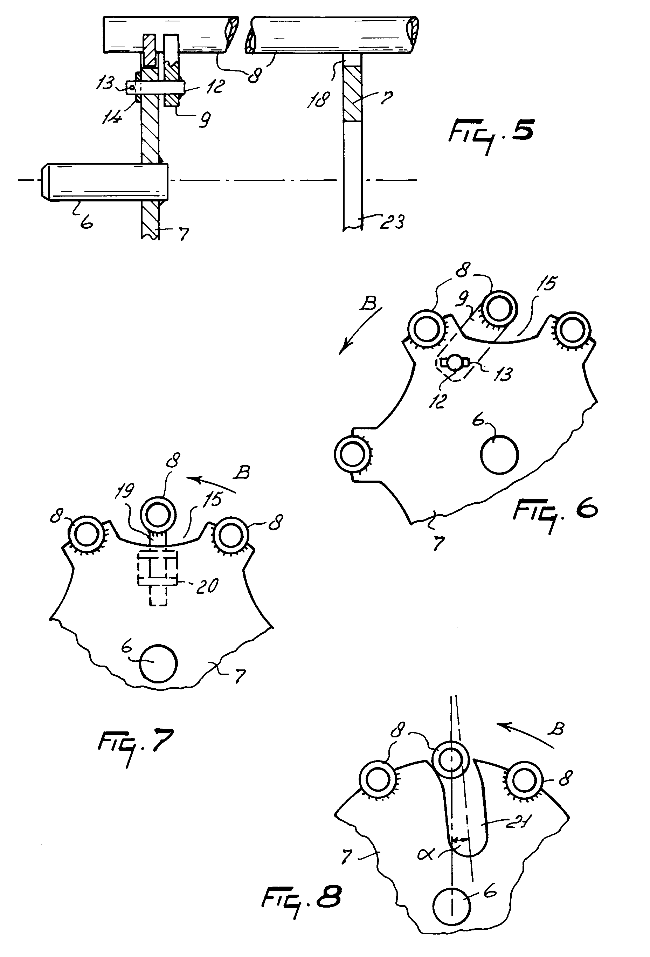

In the present embodiment, there is provided a back lash 10 between the supporting plate 16 and the relevant supporting profile of a support 7. The size of said back lash 10 is such that, relative to the maximum deflection of the relevant longitudinal element 8 in the slot hole 11 of the outermost support 7, there is allowed a deflection, proportional to the location between the central and outermost support, of the longitudinal element 8 in the direction of the centre of the roller 2. In the present embodiment, the back lash 10 at a support 7, disposed between a central and an outermost support 7, allows a movement in the direction of the centre of the roller 2, equalling half of a similar allowed movement with an outermost support, as is shown in Figure 4 in a cross-sectional view of the roller 2.

Figure 5 shows part of an alternative embodiment, in which at least one of the longitudinal elements 8, near its ends, is connected rigidly, but detachably, to an outermost support 7 and, near its longitudinal centre, is provided with a back lash allowing its movement relative to one or more local supports 7. The back lash 18 indicated in Figure 5 is preferably designed in one of the ways described in the foregoing and in what follows.

Figure 6 shows an embodiment, in which the allowed movement of a longitudinal element 8 is guided by means of a universal joint. For that purpose, the connecting pin 12 of the local connecting lug 9 is guided through a fitting aperture in a support 7. Said aperture is provided at some distance from a local radian from the centre of the roller 2 to the relevant longitudinal element 8.

Figure 7 represents a guidance in radial direction, whereby a pin 19, attached to a longitudinal element 8, is guided in said direction into an also radially extending box 20, constituted by part of a metal strap having a U-profile whose legs are welded to the support 7.

Figure 8 shows a guidance through an open slot hole 21, in which a longtitudinal element 8 is fitted movably. The slot hole is disposed at an angle relative to a radian from the centre of the roller. The angle α is situated at the side of the radian being remote from the direction of rotation B.

The function of the above-mentioned construction will be explained in what follows.

The initial position of the parts of a longitudinal element 8 is determined by their connection with a support 7. In the present embodiment, the longitudinal elements 8 are preformed according to a slightly spiral course along the circumference of the roller 2, e.g. on the basis of a pitch of a sixth of the circumference relative to the present roller width of three metres. At the places where a longitudinal element 8 is included movably relative to a support 7 in the roller 2, the longitudinal element 8 is preferably allowed a non-prestressed initial position, while making use of its curved shape. Consequently, the longitudinal element 8 is capable of moving in two directions from its initial position.

The local movements and/or vibrations of the longitudinal element 8 comprise inter alia the "inward" deflection, i.e. the deflection towards the centre of the roller 2, that undergoes the element 8 during running out under the weight of the roller 2 and the machine 1. There are also produced vibrations when a longitudinal element 8, during further running out, comes from under the roller 2. During operation of the roller, there is produced a third category of vibrations because of the fact that jerky movements of the roller are converted into vibrations of the movable longitudinal elements 8. By these movements, there is shaken off soil caking on inter alia between two longitudinal elements 8 or between a longitudinal element 8 and a support 7, and there is created extra space for allowing the soil that has penetrated into the roller 2 to disappear therefrom between the longitudinal elements. The movement of the longitudinal elements 8 is in particular desired near the two outermost supports 7, because in that region the roller 2 will tend most to be filled with soil.

In the embodiments according to Figures 1 to 5, by applying a slot hole 11, the local movement in the two directions along the centre line of said slot hole 11 is limited. From the initial position of the longitudinal element 8, and consequently of the pin 12, there is allowed a movement of 0.75 cm in both directions. In the initial position, the lug 9 and the washer 14 are situated at such a distance from the support 7 that the axial deflection resulting from the freedom of movement of the longitudinal element 8 can be absorbed. The middle fastening of the longitudinal element 8 to the support 7 is locked against axial movement. The fastening of the longitudinal element 8 to the relevant support 7, as represented in Figure 4, includes a supporting plate 16, by means of which a too large deflection of the longitudinal element in a circumferential direction is prevented. In the alternative embodiment according to Figure 7, a suchlike guidance of the possible movement of a longitudinal element 8 is realized by means of the pin 19, which is movable in the box 20, constituting a straight guide means.

In comparison with the other embodiments, the embodiments shown in Figures 6 and 8 have the advantage that the longitudinal element 8, when coming in contact with the soil locally, will be able to deflect to a large extent in the direction of the forces exercised at that moment. After an initial bending, the guide means 21 according to Figure 8 merges into a substantially radially extending part, into which the longitudinal element deflects during the lower part of its orbit. The guidance according to Figure 6 constitutes an approach thereof. Both embodiments have a damping influence on the vibrations that undergoes the longitudinal element 8 in the other part of its orbit. Preferably, the invention comprises a soil cultivating machine in which a roller 2 is interchangeably included in a simple manner so that, according to the prevailing circumstances, i.e. the kind of soil, the weather conditions and the composition of the soil, there can be applied a roller 2 according to Figures 6 and 8, or according to any one of the other embodiments.

The invention is not restricted to the aforementioned description, but also relates to all the details of the drawings. The invention furthermore relates to all sorts of alternatives in the construction, of course, falling within the scope of the following claims.

## Claims

1. A soil cultivating machine including a roller (2) provided, at its circumference, with interspaced longitudinal elements (8), such as bars, supported and interconnected in said roller by means of a plurality of radially extending supports (7), characterized in that at least one of said longitudinal elements (8) is manufactured in a shape and a material allowing elastic deformation to an at least limited extent in cross-longitudinal direction, said longitudinal element (8) being accommodated partly movably in a cross-longitudinal direction within said roller, at least one support (7) or interconnection between said support (7) and said element (8) being adapted to allow such movability.

2. A soil cultivating machine as claimed in claim 1, characterized in that a support (7) of the roller (2) comprises a slot-shaped recess (11).

3. A soil cultivating machine as claimed in claim 2, characterized in that, near both slot ends, said slot-shaped recess (11) is closed.

4. A soil cultivating machine as claimed in claim 2 or 3, characterized in that the longitudinal elements (8) are disposed spirally within the longitudinal direction of the roller (2).

5. A soil cultivating machine as claimed in any one of the preceding claims, characterized in that a longitudinal element (8) is connected to a support (7) via a lug (9) extending transversely to the longitudinal direction of the roller (2).

6. A soil cultivating machine as claimed in claim 5, characterized in that the lug (9) is fastened by means of a connecting element (12), such as a pin, disposed transversely to the relevant support (7).

7. A soil cultivating machine as claimed in claim 6, characterized in that the connecting element (12) extends into a slot hole (11).

8. A soil cultivating machine as claimed in claim 6, characterized in that the connecting pin (12) is included in an aperture in the support (7), the centre of which aperture is located at some distance from the radian towards the centre of the relevant longitudinal element (8).

9. A soil cultivating machine as claimed in any one of the preceding claims, characterized in that a longitudinal element (8), or a connecting lug (9), is movable in a guide means (11, 20, 21) of a support (7).

10. A soil cultivating machine as claimed in any one of the preceding claims, characterized in that a movably included longitudinal element (8) is rigidly connected to at least one support (7).

11. A soil cultivating machine as claimed in claim 10, characterized in that the longitudinal element (8) is rigidly connected to a support (7) provided at least nearest to the longitudinal centre of the roller (2).

12. A soil cultivating machine as claimed in any one of the preceding claims, characterized in that the locally allowed movement of the longitudinal element (8) amounts to at least a quarter of the thickness of the longitudinal element (8), measured in a direction of the movement allowed intentionally in the plane of a support in the accomodation (11/12; 10/15; 18; 19/20; 21) of the longitudinal element (8).
